# EUROPÄISCHE PATENTANMELDUNG

(11) **EP 3 742 286 A1**
(43) Veröffentlichungstag der Anmeldung: **25.11.2020**
(21) Anmeldenummer: 19175386.2
(22) Anmeldetag: 20.05.2019
(51) Int. Cl.: G06F 8/71, G06F 8/76, G06F 15/78

(54) **VERFAHREN ZUR IMPLEMENTIERUNG EINER HARDWARE-BASIERTEN APPLIKATION**

(71) Anmelder: Siemens Aktiengesellschaft, 80333 München (DE)
(72) Erfinder: Aschauer, Hans, 81829 München (DE); Falk, Rainer, 85586 Poing (DE); Feist, Christian Peter, 80689 München (DE); Zeschg, Thomas, 81543 München (DE)

(57) **Zusammenfassung**

Verfahren zur Implementierung mindestens einer Hardware-basierten Applikation (101), die mittels einer Schaltkreisanordnung mit mindestens einem konfigurierbaren Schaltkreis auf einem programmierbaren Schaltungsbaustein (40) in einem Gerät (600) mindestens eine vorgegebene Funktion einer in dem Gerät (600) implementierten Applikation ausführt, aufweisend die Schritte:
- Bereitstellen (S1) eines ersten Konfigurationsdatensatzes, der eine Ausführungsumgebung (201) mit vorgegebenen Eigenschaften ausbildet,
- Bereitstellen (S2) eines zweiten Konfigurationsdatensatzes (101), der die Schaltkreisanordnung der Hardware-basierten Applikation spezifisch für die Ausführungsumgebung (201) ausbildet,
- Erzeugen (S3) der Ausführungsumgebung (201) durch Laden des ersten Konfigurationsdatensatzes in einen wiederkonfigurierbaren Bereich (30) des programmierbaren Schaltungsbausteins (40), und
- Erzeugen (S4) der Schaltkreisanordnung der Hardware-basierten Applikation auf dem Schaltungsbaustein (40) durch Laden des zweiten Konfigurationsdatensatzes (101) in die Ausführungsumgebung (201).

## Beschreibung

Die Erfindung betrifft ein Verfahren, eine Vorrichtung sowie ein Computerprogrammprodukt zur Implementierung mindestens einer Hardware-basierten Applikation, die mittels einer Schaltkreisanordnung mit mindestens einem konfigurierbaren Schaltkreis auf einem programmierbaren Schaltungsbaustein in einem Gerät mindestens eine vorgegebene Funktion einer im Gerät implementierten Applikation ausführt.

Geräte, insbesondere eingebettete Geräte, Internet der Dinge-Geräte oder so genannte Edge-Geräte übernehmen in einem industriellen Umfeld wichtige Aufgaben und führen häufig sicherheitskritische Funktionen aus. Sie werden beispielsweise zur Fernsteuerung, Diagnose, Analyse oder auch Optimierung eines Prozesses verwendet. Die Geräte sind dabei häufig über ein Kommunikationsnetzwerk miteinander verbunden.

Da solche Geräte in industriellen Anlagen oft über einen Zeitraum von 10 bis zu 40 Jahren im Feld verwendet werden, sind sie einem sich ständig ändernden dynamischen Umfeld ausgesetzt. Um diesem dynamischen Umfeld Rechnung zu tragen, werden vor allem neue Geräte so entwickelt, dass sie über die Nutzungszeit flexibel angepasst werden können, beispielsweise durch die Verwendung von nachladbaren Applikationen, die meist durch auf Prozessoren ausgeführten Programmcode bereitgestellt werden.

Um diese Flexibilität zu gewährleisten und gleichzeitig benötigte Ressourcen und eine gute Performanz bereitstellen zu können, werden eine oder mehrere Funktionen der Applikation Hardware-basiert auf Schaltungsbausteine ausgelagert. Eine solche in Hardware ausgelagerte Funktion bzw. Funktionen wird auch als Hardware-basierte Applikation oder kurz als Hardware-App bezeichnet. Als Hardware-basierte Applikation wird auch eine auf eine Soft-CPU ausgelagerte Funktion bezeichnet, die in Form von Instruktionen / Programmen für eine Soft-CPU ausgebildet sein kann.

Bekannt sind partiell wiederkonfigurierbare Bereiche in Schaltungsbausteinen wie beispielsweise in feldprogrammierbaren Gatteranordnungen, kurz als FPGAs bezeichnet, in Ein-Chip-Systemen, auch System-on-Chip oder kurz SoC bezeichnet, in Multi-Chip-Modulen und in eingebetteten FPGAs auf anwendungsspezifischen integrierten Schaltungen, kurz ASICs genannt. Auf einem solchen partiell wiederkonfigurierbaren Bereich kann die Hardware-basierte Applikation implementiert und zur Laufzeit auch ausgetauscht werden.

Die unterschiedlichen Schaltungsbausteine, wie beispielsweise ein FPGA oder ein SoC oder ein auf einem ASIC eingebetteter FPGA erfordern jedoch Hersteller-spezifische Werkzeuge für ihre Konfiguration, die proprietäre Formate für die resultierenden Hardware-basierten Applikationen erzeugen. Die Hardware-Applikationen sind daher nicht zwischen Schaltungsbausteinen unterschiedlichen Typs, das heißt beispielsweise von unterschiedlichen Herstellern oder auch von unterschiedlichem Bausteintyp wie FPGA, SoC oder ASIC, verwendbar.

Bei einer Änderung des Schaltungsbausteintyps beziehungsweise bei Änderung eines auf dem Schaltungsbaustein bereitgestellten wiederkonfigurierbaren Bereichs müssen die Hardware-Applikationen neu erzeugt werden. Zudem sind die Hardware-basierten Applikationen durch die vom jeweiligen Schaltungsbausteintyp bereitgestellte Funktionalität und bereitgestellte Schnittstelle abhängig. Daraus resultiert ein komplizierter Entwicklungs-, Wartungs- und Aktualisierungsprozess, der die Verwendung von Hardware-basierten Applikationen erschwert.

Es ist somit die Aufgabe der vorliegenden Erfindung, Hardware-Applikationen einfacher und flexibler für unterschiedliche Schaltungsbausteine bzw. wiederkonfigurierbare Bereiche bereitstellen und implementieren zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Implementierung mindestens einer Hardware-basierten Applikation, die mittels einer Schaltkreisanordnung mit mindestens einem konfigurierbaren Schaltkreis auf einem programmierbaren Schaltungsbaustein in einem Gerät mindestens eine vorgegebene Funktion einer in dem Gerät implementierten Applikation ausführt, aufweisend die Schritte:
- Bereitstellen eines ersten Konfigurationsdatensatzes, der eine Ausführungsumgebung mit vorgegebenen Eigenschaften ausbildet,
- Bereitstellen eines zweiten Konfigurationsdatensatzes, der die Schaltkreisanordnung der Hardware-basierten Applikation spezifisch für die Ausführungsumgebung ausbildet,
- Erzeugen der Ausführungsumgebung durch Laden des ersten Konfigurationsdatensatzes in einen wiederkonfigurierbaren Bereich des programmierbaren Schaltungsbausteins, und
- Erzeugen der Schaltkreisanordnung der Hardware-basierten Applikation auf dem Schaltungsbaustein durch Laden des zweiten Konfigurationsdatensatzes in die Ausführungsumgebung.

Durch die mit dem ersten Konfigurationsdatensatz auf dem Schaltungsbaustein konfigurierte Ausführungsumgebung wird dem zweiten Konfigurationsdatensatz eine Schaltungskonfiguration mit vorgegebenen Eigenschaften bereitgestellt. Somit können Hardware-basierte Applikationen unabhängig von Typ oder Version des darunterliegenden Schaltungsbausteins, und somit unabhängig von dessen Schnittstellen, Formaten und Entwicklungswerkzeugen erstellt werden. Eine HW-Applikation, die für eine bestimmte Ausführungsumgebung entwickelt ist, kann in einfacher Weise auf Schaltungsbausteinen, wie beispielsweise FPGAs verschiedener Hersteller oder verschiedener Serien oder auch ASICs mit eingebetteten FPGA-Strukturen, auf denen eine entsprechende Ausführungsumgebung bereitgestellt wird, verwendet werden. Es wird durch den ersten Konfigurationsdatensatz eine Ausführungsumgebung in Form eines virtuellen wiederkonfigurierbaren Bereichs erzeugt, auf dem nun wiederum die HW-Applikation konfiguriert wird. Der zweite Konfigurationsdatensatz für die HW-basierte Applikation ist somit unabhängig von dem eigentlichen Schaltungsbaustein. Als Hardware-basierte Applikation wird auch eine auf eine Soft-CPU ausgelagerte Funktion bezeichnet, die in Form von Instruktionen / Programmen für eine Soft-CPU ausgebildet sein kann. Ein entsprechender zweiter Konfigurationsdatensatz umfasst somit Instruktionen in Form von Programmcode.

Ein wiederkonfigurierbarer Bereich ist dabei eine spezielle Funktionalität eines Schaltungsbausteins, die ein Rekonfigurieren von speziellen Teilen oder Regionen des Schaltungsbausteins ermöglicht, ohne dass die restliche Konfiguration des Schaltungsbausteins davon betroffen ist. Als Konfiguration eines Logikbausteins sind digitale Schaltungsanordnungen bezeichnet, die durch einen Konfigurationsdatensatz zur Laufzeit des Schaltungsbausteins bereitgestellt werden. Ein programmierbarer Schaltungsbaustein kann beispielsweise ein FPGA, ein ASIC, oder ein SoC sein.

In einer vorteilhaften Ausführungsform wird die Ausführungsumgebung durch den ersten Konfigurationsdatensatz derart konfiguriert, die Eigenschaften eines vorgegebenen Programmierbaren Bausteintyps aufzuweisen.

Eigenschaften sind beispielsweise eine Adressierung, Schnittstellen, Befehlssatz eines programmierbaren Bausteintyps. Die Ausführungsumgebung stellt somit einen virtuellen programmierbaren Baustein eines vorbestimmten Typs bereit. Die Ausführungsumgebung kann beispielsweise entsprechend einem virtuellen FPGA oder eine virtuelle CPU oder einen virtuellen digitalen Signalprozessor, kurz als vDSP bezeichnet, ausgebildet sein. Unterschiedliche Funktionen werden besonders vorteilhaft durch unterschiedliche programmierbare Bausteintypen bereitgestellt. So kann beispielsweise ein Signal besonders effizient von einem Digitalen Signalprozessor DSP verarbeitet werden. Eine kryptographische Funktion kann dagegen schneller von einem entsprechend konfigurierten FPGA ausgeführt werden. Somit kann diejenige Ausführungsumgebung, z.B. ein bestimmter programmierbarer Bausteintyp, abhängig von der durchzuführenden Funktion gewählt und erzeugt werden und somit die Leistungsfähigkeit des Schaltungsbausteins optimal ausgenutzt werden.

In einer vorteilhaften Ausführungsform wird die Ausführungsumgebung abhängig von dem programmierbaren Schaltungsbaustein eines vorgegebenen Typs erzeugt.

Eine Ausführungsumgebung bzw. der entsprechende erste Konfigurationsdatensatz wird jeweils individuell für den programmierbaren Schaltungsbaustein, auf dem die Ausführungsumgebung erzeugt und verwendet werden soll, erstellt. Ist der programmierbare Schaltungsbaustein beispielsweise ein FPGA, so umfasst der erste Konfigurationsdatensatz kompilierte Binärdaten, die auf dem Schaltungsbaustein eine Schaltkreisanordnungen ausbilden, beispielsweise einen virtuellen FPGA. Die gleiche Ausführungsumgebung, erfordert bei einer Implementierung auf einen anderen Schaltungsbausteintyp, beispielsweise einem System-on-Chip SoC einen unterschiedlichen ersten Konfigurationsdatensatz, der an den SoC angepasst ist. Dies hat jedoch den Vorteil, dass eine bestimmte Ausführungsumgebung auf programmierbaren Schaltungsbausteinen von unterschiedlichem Typ erzeugt werden können. Nachfolgend kann der gleiche zweite Konfigurationsdatensatz zum Ausbilden der Schaltkreisanordnung der Hardware-basierten Applikation auf den unterschiedlichen Schaltungsbausteinen verwendet werden.

In einer vorteilhaften Ausführungsform werden unterschiedliche Ausführungsumgebungen in jeweils unterschiedlichen wiederkonfigurierbaren Bereichen (30) des programmierbaren Schaltungsbausteins (40) erzeugt, wobei jede Ausführungsumgebung die Eigenschaften eines unterschiedlichen programmierbaren Bausteintyps aufweist.

In einem programmierbaren Schaltungsbaustein mit mehreren wiederkonfigurierbaren Bereichen können somit mehrere Ausführungsumgebungen mit Eigenschaften von unterschiedlichen programmierbaren Bausteintypen erzeugt werden. Somit kann der eine programmierbare Schaltungsbaustein für unterschiedlichste Funktionen und somit HW-basierten Applikationen verwendet werden. Es ist deutlich flexibler, wenn favorisierte Kombinationen aus Ausführungsumgebungen (SoftCPUs, vFPGAs) in jeweils unterschiedliche wiederkonfigurierbare Bereiche, quasi "nebeneinander", eingerichtet werden, als für jede denkbare oder sinnvolle Kombination einen eigenen erste Konfigurationsdatensatz, beispielsweise einen Bitstream, zur Verfügung zu stellen. Des Weiteren ist dadurch eine geringere Anzahl von unterschiedlichen ersten Konfigurationsdatensätzen erforderlich. Bei n Ausführungsumgebungen für m wiederkonfigurierbare Bereiche benötige ich n*m erste Konfigurationen. Ohne die Aufteilung sind es dagegen ungefähr n^m.

In einer vorteilhaften Ausführungsform wird mindestens eine Software-basierte Applikation, die mindestens eine weitere Funktion der Applikation ausführt, auf das Gerät geladen, wobei mindestens eine Hardware-basierte Applikation der Software-basierten Applikation zugeordnet ist und von der Software-basierten Applikation gesteuert wird.

Eine Software-basierte Applikation bezeichnet dabei eine Funktion der Applikation, die mittels Programmbefehlen und nicht durch eine konfigurierte Schaltung ausgeführt wird. Die Software-basierte Applikation kann die ihr zugeordneten Hardware-Applikationen beispielsweise entsprechend einer Funktionsabfolge ansteuern oder auch eigenständig auswechseln. Beispielsweise können aufwendige Berechnungen, wie beispielsweise kryptografische Funktionen, in Hardware ausgelagert werden und somit einen Zentralprozessor entlasten. Des Weiteren können komplexe Funktionen in mehrere Hardware-Applikationen aufgeteilt werden und somit vorhandene Schaltungsbausteine optimiert genutzt werden, indem kleinere Hardware-Applikationen auf verschiedene Schaltungsbausteine verteilt werden.

In einer vorteilhaften Ausführungsform wird eine Hardware-basierte Applikation mehreren unterschiedlichen Software-basierten Applikationen zugeordnet.

Somit kann eine beispielsweise selten benötigte Funktion, die jedoch für verschiedene Applikationen benötigt wird, ressourceneffizient von einer Hardware-basierten Applikation bereitgestellt werden.

In einer vorteilhaften Ausführungsform wird eine Anweisungsdatenstruktur, die Angaben zur Zuordnung mindestens einer Hardware-basierten Applikation zu mindestens einer Ausführungsumgebung (202, 203, 204) und/oder zur Zuordnung der mindestens einen Hardware-basierten Applikation zu mindestens einer Software-basierten Applikation aufweist, auf das Gerät geladen.

Durch die Anweisungsdatenstruktur werden beispielsweise die für eine Applikation oder auch für eine Teilapplikation benötigten Hardware-basierten Applikationen und Software-basierten Applikationen einander zugeordnet. Durch die Anweisungsdatenstruktur wird auch die Zuordnung der Hardware-basierten Applikationen zu Ausführungsumgebungen geregelt. Eine Zuordnung umfasst dabei ein Erzeugen der entsprechenden Ausführungsordnung und das anschließende erzeugen der HW-basierten Applikation auf der Ausführungsumgebung. Die Anweisungsdatenstruktur umfasst somit einen "Masterplan" für die Zusammenarbeit der Hardware-basierten und Software-basierten Applikationen zur Bereitstellung der Applikation als Ganzes. Die Anweisungsdatenstruktur enthält des Weiteren Informationen zum Installieren und Betreiben der Hardware-basierten Applikationen, beispielsweise eine Angabe zur Zielausführungsumgebung für eine Hardware-Applikation. Basierend auf der Anweisungsdatenstruktur kann die Software-basierte Applikation eigenständig ihr zugeordnete Hardware-basierte Applikationen auswechseln und diese für die entsprechenden Zwecke nutzen. Somit kann auch eine Ausführungsumgebung ausgetauscht werden, um beispielsweise eine Hardware-basierte Applikation in einem anderen Format in einer anderen Ausführungsumgebung auszuführen. Beispielsweise kann von einer Ausführungsumgebung in Form einer virtuellen FPGA-Schaltung auf eine Ausführungsumgebung in Form einer Soft-CPU-Ausführungsumgebung gewechselt werden.

In einer vorteilhaften Ausführungsform werden die mindestens eine Hardware-basierte Applikation und/oder die mindestens eine Software-basierte Applikation und/oder die Anweisungsdatenstruktur auf dem Gerät vorinstalliert oder im laufenden Betrieb empfangen und installiert.

Durch ein Vorinstallieren der Hardware- bzw. Software-basierten Applikationen und/oder der Anweisungsdatenstruktur kann eine Aktualisierung oder Um-konfiguration zur Bereitstellung der Applikation einfach und mit geringem Aktivierungsaufwand beispielsweise durch ein Umschaltsignal erfolgen. Durch ein Empfangen der Hardware- bzw. Software-basierten Applikationen sowie der Anweisungsdatenstruktur in laufenden Betrieb kann sehr flexibel die Ausführung der Applikation geändert und aktualisiert werden.

In einer vorteilhaften Ausführungsform wird die mindestens eine Ausführungsumgebung (202, 203, 204) durch eine vertrauenswürdige Rekonfigurierungsfunktion dem mindestens einen wiederkonfigurierbaren Bereich (30), auf den sie geladen wird, zugeordnet.

In einer vorteilhaften Ausführungsform wird die mindestens eine Hardware-spezifische Applikation durch die Rekonfigurierungsfunktion auf die zugeordnete Ausführungsumgebung geladen und erzeugt.

Durch die vertrauenswürdige Rekonfigurierungsfunktion wird sichergestellt, dass die durch die Anweisungsdatenstruktur vorgegebene Zuordnung manipulationsgeschützt und somit in der vorbestimmten Art und Weise ausgeführt wird. Die Rekonfigurierungsfunktion kann beispielsweise durch einen mechanischen Tamperschutz oder eine von der sonstigen Umgebung getrennte Ausbildung gegen unbefugten Zugriff geschützt und somit vertrauenswürdig sein.

Ein zweiter Aspekt der Erfindung betrifft eine Vorrichtung zur Implementierung mindestens einer Hardware-basierten Applikation, die mittels einer Schaltkreisanordnung mit mindestens einem konfigurierbaren Schaltkreis auf einem programmierbaren Schaltungsbaustein in einem Gerät mindestens eine vorgegebene Funktion einer in dem Gerät implementierten Applikation ausführt, aufweisend:
- mindestens einen programmierbaren Schaltungsbaustein,
- eine erste Speichereinheit, die derart ausgebildet ist, einen ersten Konfigurationsdatensatz, der eine Ausführungsumgebung mit vorgegebenen Eigenschaften ausbildet, bereitzustellen,
- eine zweite Speichereinheit, die derart ausgebildet ist, einen zweiten Konfigurationsdatensatz, der die Schaltkreisanordnung der Hardware-basierten Applikation spezifisch für die Ausführungsumgebung ausbildet, bereitzustellen,
- eine erste Erzeugungseinheit, die derart ausgebildet ist, die Ausführungsumgebung durch Laden des ersten Konfigurationsdatensatzes in einen wiederkonfigurierbaren Bereich des programmierbaren Schaltungsbausteins zu erzeugen, und
- eine zweite Erzeugungseinheit, die derart ausgebildet ist, die Schaltkreisanordnung der Hardware-basierten Applikation auf dem Schaltungsbaustein durch Laden des zweiten Konfigurationsdatensatzes in die Ausführungsumgebung zu erzeugen.

In einer vorteilhaften Ausführungsform weist die Vorrichtung eine Steuereinheit auf, die derart ausgebildet ist, das beschriebene Verfahren durchzuführen.

Die erfindungsgemäße Vorrichtung ermöglicht es, Hardware-basierte Applikationen unabhängig von der darunterliegenden Hardware, also insbesondere der Art und Version des Schaltungsbausteins, zu implementieren. Des Weiteren wird eine Portabilität und Rückwärtskompatibilität von Geräten mit Hardware-basierten Applikationen erhöht. So müssen bei einer Aktualisierung beispielsweise der Konfiguration des Schaltungsbausteins die Hardware-basierten Applikationen nicht mehr neu erzeugt werden, um kompatibel zu sein. Stattdessen muss lediglich die Ausführungsumgebung auf die aktualisierte Konfiguration des Schaltungsbausteins angepasst werden und somit ein aktualisierter erster Konfigurationsdatensatz bereitgestellt werden. Der zweite Konfigurationsdatensatz, der die Schaltungsanordnung der Hardware-spezifischen Applikation angibt, bleibt dagegen unverändert.

Durch die vereinfachte Aktualisierung können sicherheitskritische und betriebssicherheitsrelevante Erweiterungen, die durch Hardware-basierte Applikationen ausgeführt werden, schneller entwickelt und eingesetzt werden. Mögliche Angriffsvektoren in Hardware-basierten Applikationen können somit schneller und ohne Änderung der Basis beseitigt werden.

Des Weiteren können Hardware-basierte Applikationen durch unterschiedliche programmierbare Bausteintypen unterstützt werden. So lassen sich beispielsweise wenig komplexe Funktionen durch eine Hardware-basierte Applikation in Form einer Soft-CPU implementieren, die eine entsprechende Soft-CPU-spezifische Ausführungsumgebung beispielsweise auf einem FPGA-Schaltungsbaustein nutzt. Damit kann die Funktion auf dem Schaltungsbaustein parallel zu einer Zentralprozessoreinheit des Gerätes durchgeführt werden.

Gemäß einem dritten Aspekt betrifft die Erfindung einen programmierbaren Schaltungsbaustein, aufweisend mindestens einen wiederkonfigurierbaren Bereich, der derart ausgebildet ist,
- eine Ausführungsumgebung durch Laden eines ersten Konfigurationsdatensatzes, der eine Ausführungsumgebung mit vorgegebenen Eigenschaften ausbildet, in den wiederkonfigurierbaren Bereich des programmierbaren Schaltungsbausteins zu erzeugen, und
- eine Schaltkreisanordnung der Hardware-basierten Applikation auf dem Schaltungsbaustein durch Laden des zweiten Konfigurationsdatensatzes, der die Schaltkreisanordnung der Hardware-basierten Applikation spezifisch für die Ausführungsumgebung ausbildet, in der Ausführungsumgebung zu erzeugen.

Ein solcher Schaltungsbaustein kann optimiert an die mindestens eine auszuführende Funktion konfiguriert werden und somit effizient die Funktion ausführen. Insbesondere können mehrere Ausführungsumgebungen mit Eigenschaften unterschiedlicher programmierbarer Bausteintypen konfiguriert werden.

Gemäß einem vierten Aspekt betrifft die Erfindung ein Computerprogrammprodukt, das direkt in einen Speicher eines digitalen Computers ladbar ist und Programmcodeteile umfasst, die dazu geeignet sind, die Schritte des beschriebenen Verfahrens durchzuführen.

Das gesamte Verfahren kann auch sinnvoll eingesetzt werden, wenn man komplett auf Partial Reconfiguration, d.h. wiederkonfigurierbare Bereiche verzichtet. In dem Fall dient es ausschließlich einer vereinfachten und flexibleren Produktentwicklung, nicht einer verbesserten Anpassbarkeit im Feld. Der ersten Konfigurationsdatensatz ist in diesem Fall mit dem zweiten Konfigurationsdatensatz verbunden.

Sofern in der nachfolgenden Beschreibung nichts anderes angegeben ist, beziehen sich die Begriffe "Bereitstellen", "Erzeugen", "Laden", "Konfigurieren", "Zuordnen" und der gleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Bei einem programmierbaren Schaltungsbaustein kann es sich insbesondere um eine feldprogrammierbare Gatteranordnung FPGA, um anwendungsspezifische integrierte Schaltungen ASIC bzw. anwendungsspezifische Standardprodukte ASSPs oder kundenspezifische Standardprodukt CSSP, oder System on Chips SoC handeln.

Eine "Einheit", zum Beispiel eine Speichereinheit, oder Erzeugungseinheit oder Steuereinheit kann hardwaretechnisch und/oder auch softwaretechnisch implementiert sein. Bei einer hardwaretechnischen Implementierung kann die jeweilige Einheit als Vorrichtung oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ausführungsbeispiele des erfindungsgemäßen Verfahrens sowie der erfindungsgemäßen Vorrichtung, programmierbaren Schaltungsbausteinen sind in den Zeichnungen beispielhaft dargestellt und werden anhand der nachfolgenden Beschreibung näher erläutert. Es zeigen:
- Fig. 1: eine schematische Darstellung einer herkömmlichen Implementierung von Hardware-basierten Applikationen auf einem programmierbaren Schaltungsbaustein;
- Fig. 2: ein erstes Ausführungsbeispiel des erfindungsgemäßen Verfahrens an Hand eines erfindungsgemäßen Schaltungsbausteins in schematischer Darstellung;
- Fig. 3: ein Ausführungsbeispiel zur Implementierung einer Hardware-basierten Applikation auf einen geänderten programmierbaren Schaltungsbaustein in schematischer Darstellung;
- Fig. 4: ein Ausführungsbeispiel zur Implementierung mehrerer Hardware-basierter Applikationen für mehrere Ausführungsumgebungen mit Eigenschaften entsprechend unterschiedlichen programmierbaren Bausteintypen auf einen programmierbaren Schaltungsbaustein in schematischer Darstellung;
- Fig. 5: ein Ausführungsbeispiel des erfindungsgemäßen Verfahrens als Ablaufdiagramm; und
- Fig. 6: ein Ausführungsbeispiel der erfindungsgemäßen Vorrichtung zur Implementierung einer Applikation auf einem Gerät in schematischer Darstellung.

Einander entsprechende Teile sind in allen Figuren mit den gleichen Bezugszeichen versehen.

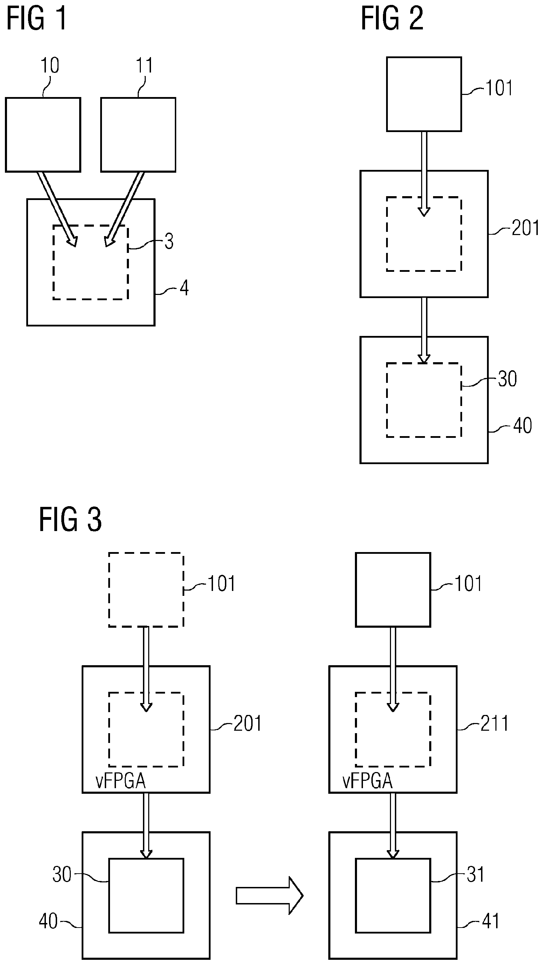

Figur 1 zeigt eine Implementierung von zwei Hardware-basierten Applikationen 10, 11 auf einem programmierbaren Schaltungsbaustein 4. Der programmierbare Schaltungsbaustein 4 weist einen teilweise wiederkonfigurierbaren Bereich 3 auf. Dieser Bereich 3 kann zur Laufzeit des Schaltungsbausteins 4 konfiguriert werden. Die Schaltungsanordnung der Hardware-basierten Applikationen 10, 11 werden über jeweils einen Konfigurationsdatensatz erzeugt, der in den Schaltungsbaustein 4 geladen wird. Die entsprechenden Konfigurationsdatensätze müssen dabei an den gewählten Schaltungsbaustein, beispielsweise bezüglich eines Typs, einer Version oder einem Hersteller, sowie einem bestimmten wiederkonfigurierbaren Bereich 3 des Schaltungsbausteins angepasst sein.

Figur 2 zeigt einen erfindungsgemäßen Schaltungsbaustein 40 mit einem wiederkonfigurierbaren Bereich 30. Im Gegensatz zum Schaltungsbaustein 4 wird eine Hardware-basierte Applikation 101 nun nicht direkt auf dem Schaltungsbaustein 40, sondern auf eine Ausführungsumgebung 201, die vorgegebene Eigenschaften aufweist, implementiert. Bei einer Änderung am Schaltungsbaustein 40 muss lediglich die Ausführungsumgebung 201 bezüglich dem geänderten Schaltungsbaustein angepasst werden. Die vorgegebenen Eigenschaften der Ausführungsumgebung 201 ermöglichen es, die HW-basierte Applikation 101 bzw. einen entsprechenden zweiten Konfigurationsdatensatz unverändert auf der Ausführungsumgebung 201 zu konfigurieren. Die vorgegebenen Eigenschaften entsprechen insbesondere Eigenschaften eines vorgegebenen einer Soft-CPU, vFPGAs, vDSPs. Durch die Ausführungsumgebung 201 wird auf dem Schaltungsbaustein 40 somit beispielsweise ein virtueller programmierbarer Baustein eines vorgegebenen Typs konfiguriert, auf den wiederum die Schaltungsanordnung der HW-basierte Applikation 101 konfiguriert wird. Somit kann abhängig von der zu implementierenden Funktion die Ausführungsumgebung mit den für die Funktion günstigsten vorgegebenen Eigenschaften, erzeugt werden.

Eine kryptographische Funktion soll als HW-basierte Applikation beispielsweise durch einen Ausführungsumgebung vom Typ FPGA (vFPGA) realisiert werden. Dazu wird eine entsprechende FPGA-spezifische Ausführungsumgebung 201, also eine Ausführungsumgebung mit Eigenschaften eines FPGAs, mittels einem ersten Konfigurationsdatensatz in den wiederkonfigurierbaren Bereich 30 des programmierbaren Schaltungsbausteins 40 geladen und damit die FPGA-spezifische Ausführungsumgebung 201 erzeugt. In diese FPGA-spezifische Ausführungsumgebung 201 wird nun ein zweiter Konfigurationsdatensatz geladen, der die Schaltkreisanordnung der Hardware-basierten Applikation 101 für die FPGA-spezifische Ausführungsumgebung 201 ausbildet, geladen.

Wird alternativ die Hardware-basierte Applikation als Programmcode für eine zentrale Prozessoreinheit CPU bereitgestellt, wird diese ebenfalls nicht direkt in den wiederkonfigurierbaren Bereich 30 des Schaltungsbausteins 40 geladen, sondern es wird vorher ein erster Konfigurationsdatensatz, der eine CPU-spezifische Ausführungsumgebung ausbildet (z.B. eine ARM-CPU), auf den Schaltungsbaustein 40 in den wiederkonfigurierbare Bereich 30 geladen. Anschließend wird der zweite Konfigurationsdatensatz (hier in Form von CPU-Instruktionen) für die Hardware-basierte Applikation in die CPU-spezifische Ausführungsumgebung geladen und die Hardware-Applikation somit erzeugt.

Alternativ wird eine DSP-spezifische Ausführungsumgebung auf dem Schaltungsbaustein 40 erzeugt und eine entsprechend für einen DSP erstellte zweite Konfigurationsdatensatz für die Hardware-basierte Applikation auf die DSP-spezifischen Ausführungsumgebung geladen.

Somit kann eine Hardware-Applikation flexibel auf Ausführungsumgebungen mit Eigenschaften von unterschiedlichen programmierbaren Bausteintypen implementiert werden. Es können so weitere programmierbare Bausteintyp-spezifische Ausführungsumgebungen beispielsweise für einen Grafikprozessor oder für ein neuronales Netz erzeugt werden. Die Ausführungsumgebung muss dabei die Art bzw. den Typ des Schaltungsbausteins berücksichtigen. Der erste Konfigurationsdatensatz einer FPGA-Ausführungsumgebung der beispielsweise auf einem FPGA als Schaltungsbaustein implementiert wird, unterscheidet sich von einer FPGA-spezifischen Ausführungsumgebung bzw. dem entsprechenden ersten Konfigurationsdatensatz, der auf einem ASIC oder einem SoC als Schaltungsbaustein implementiert wird. Somit wird also die programmierbare Bausteintyp-spezifische Ausführungsumgebung abhängig von dem vorgegebenen Typ des programmierbaren Schaltungsbausteins, auf dem die Ausführungsumgebung implementiert werden soll, erzeugt.

Figur 3 zeigt eine Implementierung der Hardware-basierten Applikation 101 bei einer Änderung des programmierbaren Schaltungsbausteins 40 beispielsweise auf einer neuen Version des gleichen programmierbaren Schaltungsbausteins 41. In diesem Fall wird lediglich ein neuer erster Konfigurationsdatensatz für eine neue Ausführungsumgebung 211, die auf die neue Version also Schaltungsbaustein 41 angepasst ist, bereitgestellt. Durch Laden des entsprechenden ersten Konfigurationsdatensatzes in den wiederkonfigurierbaren Bereich 31 werden alle Anpassungen auf den aktuellen Schaltungsbaustein 41 bereitgestellt, sodass die Hardware-basierte Applikation 101 bzw. der entsprechende zweite Konfigurationsdatensatz unverändert auf die nun angepasste Ausführungsumgebung 211 und somit dem neuen Schaltungsbaustein 41 geladen werden kann.

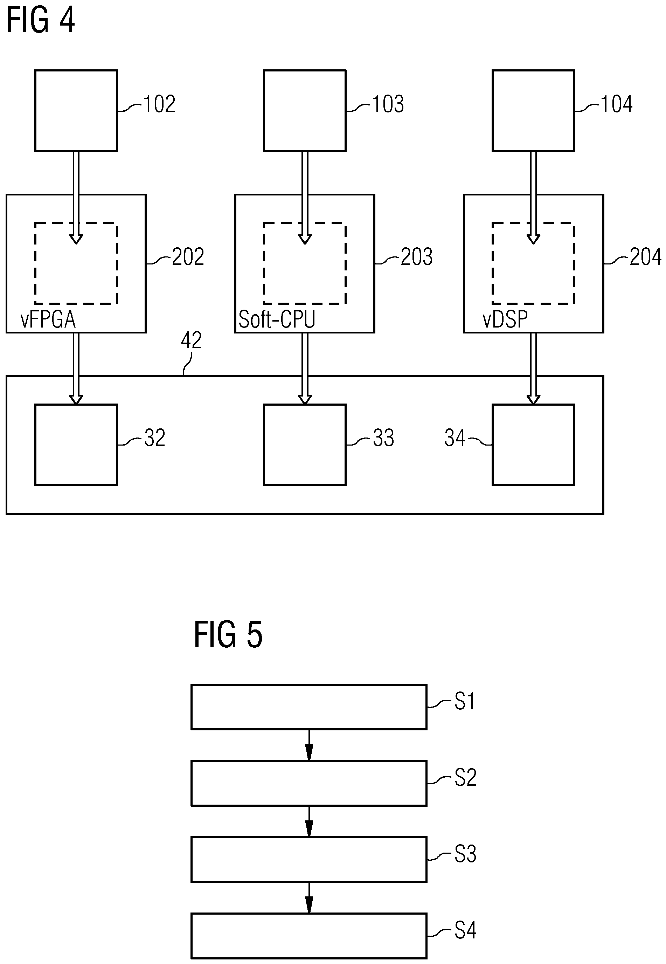

Figur 4 zeigt nun ein Beispiel, in dem auf einem Schaltungsbaustein 42 mehrere wiederkonfigurierbare Bereiche 32, 33, 34 ausgebildet sind. Auf die wiederkonfigurierbaren Bereiche 32, 33, 34 ist nun jeweils eine Ausführungsumgebung 202, 203, 204 mit jeweils Eigenschaften eines unterschiedlichen programmierbaren Bausteintyps geladen. So wird beispielsweise eine FPGA-spezifische Ausführungsumgebung 202 auf den wiederkonfigurierbaren Bereich 32, eine CPU-spezifische Ausführungsumgebung 203 auf den wiederkonfigurierbaren Bereich 33 und eine DSP-spezifische Ausführungsumgebung 204 auf den wiederkonfigurierbaren Bereich 34 geladen und erzeugt. Entsprechend können die Hardware-basierten Applikationen, also die Hardware-Applikation für FPGA 102 auf die FPGA-spezifische Ausführungsumgebung 202, die CPU-spezifische Hardware-basierte Applikation 103 auf die Soft-CPU-spezifische Ausführungsumgebung 203 und die DSP-spezifische Hardware-basierte Applikation 104 auf die DSP-spezifische Ausführungsumgebung 204 geladen werden.

Wie in Figur 4 gezeigt, können dabei mehrere Hardware-basierte Applikationen 102, 103, 104, die jeweils spezifisch für die jeweilige Ausführungsform 202, 203, 204 angepasst sind, in einem gemeinsamen Schaltungsbaustein 42 erzeugt werden.

In Figur 5 werden nun die Verfahrensschritte anhand eines Ablaufdiagramms aufgezeigt. In einem ersten Verfahrensschritt S1 wird ein erster Konfigurationsdatensatz, der die programmierbare Bausteintyp-spezifische Ausführungsumgebung auf dem Schaltungsbaustein ausbildet, bereitgestellt. In einem zweiten Verfahrensschritt S2 wird der zweite Konfigurationsdatensatz, der die Schaltkreisanordnung der Hardware-basierten Applikation spezifisch für die programmierbare Bausteintyp-spezifische Ausführungsumgebung ausbildet, bereitgestellt. Die Verfahrensschritte S1 und S2 können auch in umgekehrter Reihenfolge durchgeführt werden.

Anschließend wird in Verfahrensschritt S3 die programmierbare Bausteintyp-spezifische Ausführungsumgebung durch Laden des ersten Konfigurationsdatensatzes in den wiederkonfigurierbaren Bereich des programmierbaren Schaltungsbausteins erzeugt. Im Verfahrensschritt S4 wird die Schaltkreisanordnung der Hardware-basierten Applikation auf dem Schaltungsbaustein durch Laden des zweiten Konfigurationsdatensatzes in die programmierbare Bausteintyp-spezifische Ausführungsumgebung erzeugt. Durch den ersten Konfigurationsdatensatz wird eine Virtualisierungsschicht zwischen den Schaltungsbaustein und der Hardware-basierte Applikation eingefügt, die ein Format des zweiten Konfigurationsdatensatzes der Hardware-basierten Applikation vom Schaltungsbaustein 40 entkoppelt.

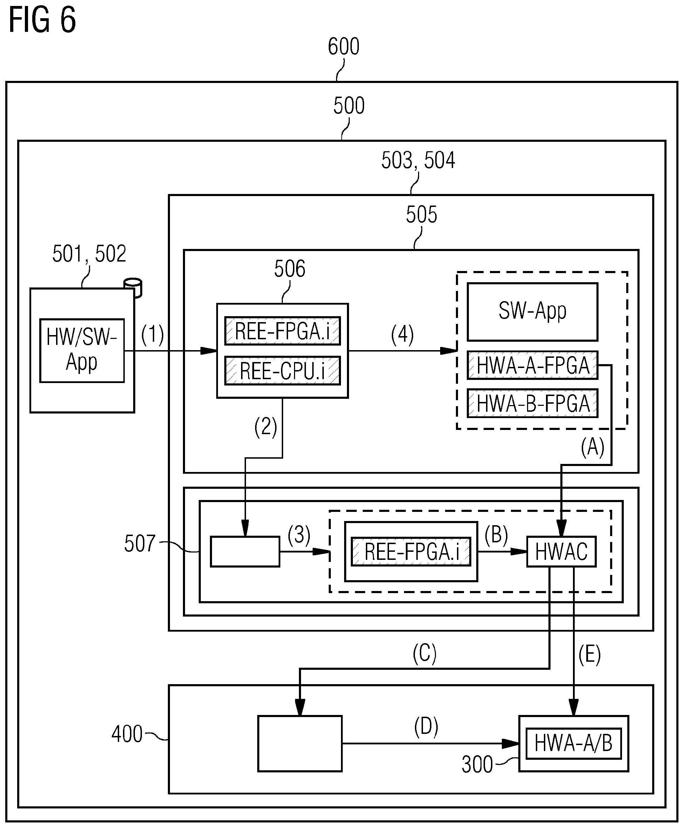

Figur 6 zeigt nun eine erfindungsgemäße Vorrichtung 500 mit der eine Applikation, die mindestens eine Software-basierte Applikation und mindestens eine Hardware-basierte Applikation aufweist, einem Gerät 600, bereitgestellt wird. Die Vorrichtung 500 ist bevorzugt innerhalb des Geräts angeordnet. Die Vorrichtung 500 umfasst einen programmierbaren Schaltungsbaustein 400, eine erste sowie eine zweite Speichereinheit 501, 502 sowie eine erste und zweite Erzeugungseinheit 503, 504. Die Vorrichtung 500 umfasst des Weiteren eine Steuereinheit 505, die beispielsweise als Teil einer zentralen Prozessoreinheit des Geräts ausgebildet ist.

Anhand der Vorrichtung 500 wird nun beispielhaft eine Implementierung einer Applikation, bestehend aus mindestens einer Software-basierten Applikation und mindestens einer Hardware-basierten Applikation aufgezeigt. Von der Speichereinheit 501, 502 wird eine Anweisungsdatenstruktur, die Angaben zur Zuordnung der mindestens einen Hardware-basierten Applikation zu mindestens einer programmierbaren Bausteintyp-spezifischen Ausführungsumgebung und/oder zur Zuordnung der mindestens einen Hardware-basierten Applikation zu mindestens einer Software-basierten Applikation aufweist, auf das Gerät 600 und insbesondere in eine Rekonfigurierungssteuereinheit 506, die eine Rekonfigurationsfunktion aufweist, übermittelt, siehe Pfeil 1. Gleichzeitig oder auch getrennt werden die für eine Applikation notwendigen Hardware- und Software-basierten Applikationen auf das Gerät geladen. Alternativ können die Hardware- bzw. Software-basierten Applikationen sowie die Anweisungsdatenstruktur auf dem Gerät vorinstalliert sein.

Für das Einrichten einer Applikation werden folgende Schritte durchgeführt: Die Rekonfigurierungssteuereinheit 506 empfängt die Hardware- und Software-Applikationen HW/SW-App der Applikation, siehe Pfeil 1. Dieses enthält die Software-basierte Applikation und die von ihr verwendeten Hardware-basierten Applikationen, die beide beispielsweise eine FPGA-spezifischen Ausführungsumgebung benötigen. Die Rekonfigurierungssteuereinheit 506 signalisiert, siehe Pfeil 2, einer Treiberkomponente für Hardware-basierte Applikationen 507, dass für die Software-basierte Applikation SW-App Datenstrukturen und eine Schnittstelle zu einem wiederkonfigurierbaren Bereich 300 erzeugt werden sollen. Weiterhin übergibt die Rekonfigurationssteuereinheit 506 die benötigten, hier FPGA-spezifische Ausführungsumgebung für den zu verwendenden wiederkonfigurierbaren Bereich 300, siehe ebenfalls Pfeil 2, an die Treiberkomponente 507.

Die Treiberkomponente 507 erstellt eine interne Abhängigkeitsliste mit einer Zuordnung der mindestens einen HW-Applikation zur mindestens einen Software-Applikation, siehe Pfeil 3. So lässt sich speziell im Falle von unterschiedlichen programmierbaren Bausteintyp-spezifischen Ausführungsumgebungen eine Zuordnung zwischen den Hardware-basierten Applikationen und den benötigten Ausführungsumgebungen herstellen, sodass diese bei Bedarf ausgetauscht werden kann. Beispielsweise benutzt eine SW-Applikation zwei HW-Applikationen, die jedoch eine unterschiedliche Ausführungsumgebung benötigen. Sobald die SW-Applikation die HW-Applikationen austauscht, wird die der HW-Applikation zugeordnete Ausführungsumgebung geladen, bevor die neue HW-Applikation in diese Ausführungsumgebung geladen werden kann. Die Rekonfigurationseinheit 506 startet die Software-Applikation und erstellt zudem die entsprechende Laufzeitumgebung der Software-Applikation, in der auch die zugehörigen Hardware-Applikationen abgelegt werden, siehe Pfeil 4.

Für das Erzeugen, auch als Instantiierung bezeichnet, von Hardware-Applikationen werden folgende Schritte durchgeführt:
Die Software-Applikation SW-App wählt eine Hardware-Applikation HWA-A, HWA-B und übergibt diese an die Hardware-Steuerlogik HWAC, siehe Pfeil A. Diese ermittelt unter Verwendung der Abhängigkeitsliste und der bereitgestellten Hardware-Apps HWA-A, HWA-B die benötigten Ausführungsumgebungen, siehe Pfeil B. Befindet sich die benötigte Ausführungsumgebung 202 noch nicht in dem zugewiesenen wiederkonfigurierbaren Bereich 300, so wird diese zunächst an den Schaltungsbaustein 400 übertragen, siehe Pfeil C. Dort wird die Ausführungsumgebung instantiiert, siehe Pfeil D.
Anschließend überträgt die Steuerlogik HWAC die eigentliche Hardware-App an die Ausführungsumgebung, siehe Pfeil E, welche diese wiederum instantiiert. Die Hardware-Applikation kann anschließend durch die Software-basierte Applikation verwendet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Implementierung mindestens einer Hardware-basierten Applikation (101), die mittels einer Schaltkreisanordnung mit mindestens einem konfigurierbaren Schaltkreis auf einem programmierbaren Schaltungsbaustein (40) in einem Gerät (600) mindestens eine vorgegebene Funktion einer in dem Gerät (600) implementierten Applikation ausführt, aufweisend die Schritte:
- Bereitstellen (S1) eines ersten Konfigurationsdatensatzes, der eine Ausführungsumgebung (201) mit vorgegebenen Eigenschaften ausbildet,
- Bereitstellen (S2) eines zweiten Konfigurationsdatensatzes (101), der die Schaltkreisanordnung der Hardware-basierten Applikation spezifisch für die Ausführungsumgebung (201) ausbildet,
- Erzeugen (S3) der Ausführungsumgebung (201) durch Laden des ersten Konfigurationsdatensatzes in einen wiederkonfigurierbaren Bereich (30) des programmierbaren Schaltungsbausteins (40), und
- Erzeugen (S4) der Schaltkreisanordnung der Hardware-basierten Applikation auf dem Schaltungsbaustein (40) durch Laden des zweiten Konfigurationsdatensatzes (101) in die Ausführungsumgebung (201).

2. Verfahren nach Anspruch 1, wobei der erste Konfigurationsdatensatz die Ausführungsumgebung (201) derart konfiguriert, Eigenschaften eines vorgegebenen programmierbaren Bausteintyps aufzuweisen.

3. Verfahren nach einem der vorangehenden Ansprüche, wobei die Ausführungsumgebung (201) abhängig von dem programmierbaren Schaltungsbaustein (40) eines vorgegebenen Typs erzeugt wird.

4. Verfahren nach einem der vorangehenden Ansprüche, wobei unterschiedliche Ausführungsumgebungen (202, 203, 204) in jeweils unterschiedlichen wiederkonfigurierbaren Bereichen (32, 33, 34) des programmierbaren Schaltungsbausteins (42) erzeugt werden.

5. Verfahren nach einem der vorangehenden Ansprüche, wobei mindestens eine Software-basierte Applikation, die mindestens eine weitere Funktion der Applikation ausführt, auf das Gerät geladen wird, und wobei die mindestens eine Hardware-basierte Applikation der Software-basierte Applikation zugeordnet ist und von der Software-basierte Applikation gesteuert wird.

6. Verfahren nach Anspruch 5, wobei eine Hardware-basierte Applikation mehreren unterschiedlichen Software-basierten Applikationen zugeordnet wird.

7. Verfahren nach einem der vorangehenden Ansprüche, wobei eine Anweisungsdatenstruktur, die Angaben zur Zuordnung der Hardware-basierten Applikationen zu Ausführungsumgebungen und/oder zur Zuordnung der Hardware-basierten Applikationen zu mindestens einer Software-basierten Applikation aufweist, auf das Gerät geladen wird.

8. Verfahren nach Anspruch 7, wobei die mindestens eine Hardware-basierte Applikation und/oder die mindestens eine Software-basierten Applikation und/oder die Anweisungsdatenstruktur auf dem Gerät vorinstalliert werden oder im laufenden Betrieb empfangen und installiert werden.

9. Verfahren nach einem der Ansprüche 5 bis 8, wobei die mindestens eine Ausführungsumgebung, durch eine vertrauenswürdige Rekonfigurierungsfunktion dem mindestens einen wiederkonfigurierbaren Bereich (300), auf den sie geladen wird, zugeordnet wird.

10. Verfahren nach Anspruch 9, wobei die mindestens eine HWspezifische Applikation durch die Rekonfigurierungsfunktion auf die zugeordnete Ausführungsumgebung geladen und erzeugt wird.

11. Vorrichtung zur Implementierung mindestens einer Hardware-basierten Applikation, die mittels einer Schaltkreisanordnung mit mindestens einem konfigurierbaren Schaltkreis auf einem programmierbaren Schaltungsbaustein (400) in einem Gerät (600) mindestens eine vorgegebene Funktion einer in dem Gerät (600) implementierten Applikation ausführt, aufweisend:
- mindestens einen programmierbaren Schaltungsbaustein (400),
- eine erste Speichereinheit (501), die derart ausgebildet ist, einen ersten Konfigurationsdatensatz, der eine Ausführungsumgebung mit vorgegebenen Eigenschaften ausbildet, bereitzustellen,
- eine zweite Speichereinheit (501), die derart ausgebildet ist, einen zweiten Konfigurationsdatensatzes (101), der die Schaltkreisanordnung der Hardware-basierten Applikation spezifisch für die Ausführungsumgebung ausbildet, bereitzustellen,
- eine erste Erzeugungseinheit (503), die derart ausgebildet ist, die Ausführungsumgebung (201) durch Laden des ersten Konfigurationsdatensatzes in einen wiederkonfigurierbaren Bereich (30) des programmierbaren Schaltungsbausteins (40) zu erzeugen, und
- eine zweite Erzeugungseinheit (504), die derart ausgebildet ist, die Schaltkreisanordnung der Hardware-basierten Applikation auf dem Schaltungsbaustein (400) durch Laden des zweiten Konfigurationsdatensatzes in die Ausführungsumgebung zu erzeugen.

12. Vorrichtung nach Anspruch 11, aufweisend eine Steuereinheit (505), die derart ausgebildet ist, das Verfahren gemäß einem der Ansprüche 1 bis 10 auszuführen.

13. Programmierbarer Schaltungsbaustein, aufweisend mindestens einen wiederkonfigurierbaren Bereich (30), der derart ausgebildet ist,
- eine Ausführungsumgebung (201) durch Laden eines ersten Konfigurationsdatensatzes, der eine Ausführungsumgebung (201) mit vorgegebenen Eigenschaften ausbildet, in den wiederkonfigurierbaren Bereich (30) des programmierbaren Schaltungsbausteins (40) zu erzeugen, und
- eine Schaltkreisanordnung der Hardware-basierten Applikation auf dem Schaltungsbaustein (40) durch Laden des zweiten Konfigurationsdatensatzes (101), der die Schaltkreisanordnung der Hardware-basierten Applikation spezifisch für die Ausführungsumgebung (201) ausbildet, in die Ausführungsumgebung (201) zu erzeugen.

14. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 10 durchzuführen.
